# EUROPÄISCHE PATENTANMELDUNG

(11) **EP 1 816 373 A2**
(43) Veröffentlichungstag der Anmeldung: **08.08.2007**
(21) Anmeldenummer: 07001230.7
(22) Anmeldetag: 20.01.2007
(51) Int. Cl.: F16G 13/16

(54) **Energieführungskette**

(30) Priorität: 07.02.2006 DE 102006005745
(71) Anmelder: Murrplastik Systemtechnik GmbH, 71570 Oppenweiler (DE)
(72) Erfinder:
(74) Vertreter: Reule, Hanspeter

(57) **Zusammenfassung**

Die Erfindung betrifft eine Energieführungskette mit mehreren in Kettenlängsrichtung aneinandergereihten Kettengliedern (12), wobei die Kettenglieder (12) jeweils zwei Seitenglieder (14) und mindestens einen die Seitenglieder (14) miteinander verbindenden Rahmensteg (16) aufweisen, wobei die Seitenglieder (14) jeweils einen Verbindungszapfen (26) an ihrem ersten Ende (22) und einen zum zweiten Ende (28) hin eine Randöffnung (32) aufweisenden Wanddurchbruch (34) zur drehbaren Aufnahme des Verbindungszapfens (26) des in Kettenlängsrichtung folgenden Seitengliedes (14) aufweisen, wobei die Kontur der Wanddurchbrüche (34) der Kontur der Verbindungszapfen (26) entspricht, wobei die Verbindungszapfen (26) auf sich in Kettenlängsrichtung erstreckenden Verbindungsstegen (24) zum Eingreifen in die Randöffnungen (32) angeordnet sind, wobei die Randöffnungen (32) jeweils zwei Anschlagflächen (30) als Endanschläge für den in sie eingreifenden Verbindungssteg (24) beim Drehen des Verbindungszapfens (26) im Wanddurchbruch (34) aufweisen, und wobei die beiden Verbindungszapfen (26) jedes der Kettenglieder (12) sich quer zur Kettenlängsrichtung in entgegengesetzten Richtungen verjüngen.

## Beschreibung

Die Erfindung betrifft eine Energieführungskette sowie ein Verfahren zu ihrer Herstellung und ein Kettenglied für eine Energieführungskette.

Es sind Energieführungsketten aus Kunststoff bekannt, die aus im Spritzgußprozeß hergestellten Einzelteilen zusammengesetzt werden. Diese Ketten sind sehr belastbar, aber teuer in der Herstellung. Aus der DE 100 17 514 A1 ist eine Energieführungskette bekannt, die aus einem Extrusionsprofil durch Schneiden mit Messern hergestellt wird, was ein kostengünstigeres Verfahren darstellt. Das Extrusionsprofil ist im Querschnitt rechteckförmig und innen hohl. Durch den Schneidprozeß wird das Extrusionsprofil in eine Vielzahl von Abschnitten getrennt, welche jeweils ein Kettenglied bilden. Dabei umgreift jeweils ein Kettenglied das in der Kette folgende Kettenglied an den Außenseiten seiner Seitenglieder, und in den überlappenden Bereichen sind Drehgelenke angeordnet. Um diese Überlappungen herzustellen, müssen die Seitenwände des Extrusionsprofils in ihrer Längsrichtung durchgeschnitten werden. Dies verringert die Stabilität der Kette.

Es ist daher Aufgabe der Erfindung, eine Energieführungskette zu schaffen, die eine kostengünstige Herstellbarkeit mit erhöhter Festigkeit vereint.

Die Aufgabe wird erfindungsgemäß durch eine Energieführungskette mit den Merkmalen des Anspruchs 1 sowie ein Kettenglied mit den Merkmalen des Anspruchs 9 gelöst. Vorteilhafte Weiterbildungen sind Gegenstand der abhängigen Ansprüche.

Die Erfindung basiert auf dem Grundprinzip, dass sich die Seitenglieder von in der Kette aufeinanderfolgenden Kettengliedern nicht seitlich überlappen. Vielmehr greifen die die Verbindungszapfen tragenden Verbindungsstege über die endseitig angeordneten Randöffnungen in das in der Reihe folgende Kettenglied ein. Indem die beiden einander gegenüberliegenden Verbindungszapfen eines jeden Kettenglieds sich quer zur Kettenlängsrichtung in entgegengesetzten Richtungen verjüngen, wird verhindert, dass sich die Verbindung zweier aufeinanderfolgender Kettenglieder bei Auftreten seitlicher Kräfte löst.

Die erfindungsgemäße Energieführungskette wird besonders vorteilhaft aus einem Kunststoffstrang hergestellt. Dieser wird in einem Extrusionsverfahren erzeugt und ist im Querschnitt entweder U-förmig oder, wenn jedes Kettenglied einen zweiten, einstückig angeformten Rahmensteg aufweisen soll, im Querschnitt rechteckig und hohl. Der extrudierte Strang wird mittels eines Laserschneidgeräts in mehrere, die Kettenglieder bildende Abschnitte getrennt. Dabei schneidet das Laserschneidgerät zum einen Material aus dem Strang, so dass Spielräume für die Beweglichkeit der Kettenglieder untereinander erhalten werden. Zum anderen führt das Laserschneidgerät Trennschnitte durch, die die Kettenglieder voneinander trennen, wie insbesondere im Bereich der Wanddurchbrüche und der in den Wanddurchbrüchen drehbar gelagerten Verbindungszapfen. Der Einsatz eines Laserschneidgeräts ist hierbei besonders vorteilhaft, wenn Schnitte durchgeführt werden, die von der Normalen abweichend schräg in das Material eindringen.

Die Verbindungszapfen weisen vorzugsweise die Form von Kegelstümpfen auf. Diese Geometrie ist mit dem Laserschneidverfahren gut herstellbar. Dabei ist es möglich, dass sich die Kegelstümpfe jeweils zum Kettenäußeren verjüngen. Es wird jedoch bevorzugt, dass sich die Kegelstümpfe jeweils zum Ketteninneren hin verjüngen. Vorteilhaft weisen die Seitenglieder eine konstante, der Höhe der Kegelstümpfe entsprechende Dicke auf. Dies erhöht die Stabilität der Verbindung und erleichtert die Herstellung der Kette, da dann lediglich ein Schnitt entlang des Kegelstumpfmantels durchgeführt werden muß, um den Verbindungszapfen zu formen.

Zweckmäßig weisen die Kettenglieder jeweils ein einstückig zusammenhängendes Grundelement, bestehend aus den beiden Seitengliedern und dem mindestens einen Rahmensteg auf. Zusätzlich weisen die Kettenglieder vorteilhaft jeweils einen weiteren, die beiden Seitenglieder miteinander verbindenden Rahmensteg auf. Der weitere Rahmensteg kann mittels eines Filmscharniers an einem der Seitenglieder einstückig angeformt und am anderen Seitenglied lösbar befestigt sein. Zur Herstellung der Energieführungskette wird dann ein im Querschnitt rechteckiger, hohler Strang aus extudiertem Kunststoff verwendet. Der weitere Rahmensteg kann jedoch auch als separateres Bauteil an beiden Seitengliedern lösbar befestigt sein, wobei zur Herstellung der Energieführungskette vorteilhaft ein im Querschnitt U-förmiger Strang extrudiert wird.

Im Folgenden wird die Erfindung anhand der in der Zeichnung in schematischer Weise dargestellten Ausführungsbeispiele näher erläutert. Es zeigen
- Fig. 1: einen Teil einer Energieführungskette, bestehend aus mehreren Grundelementen von Kettengliedern;
- Fig. 2: eine Seitenansicht zweier Grundelemente gemäß Fig. 1 und
- Fig. 3: ein Kettenglied einer Energieführungskette in perspektivischer Ansicht.

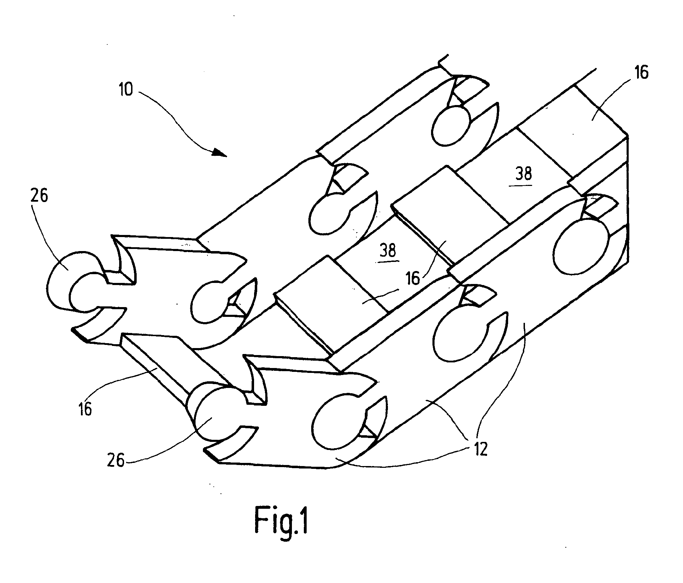

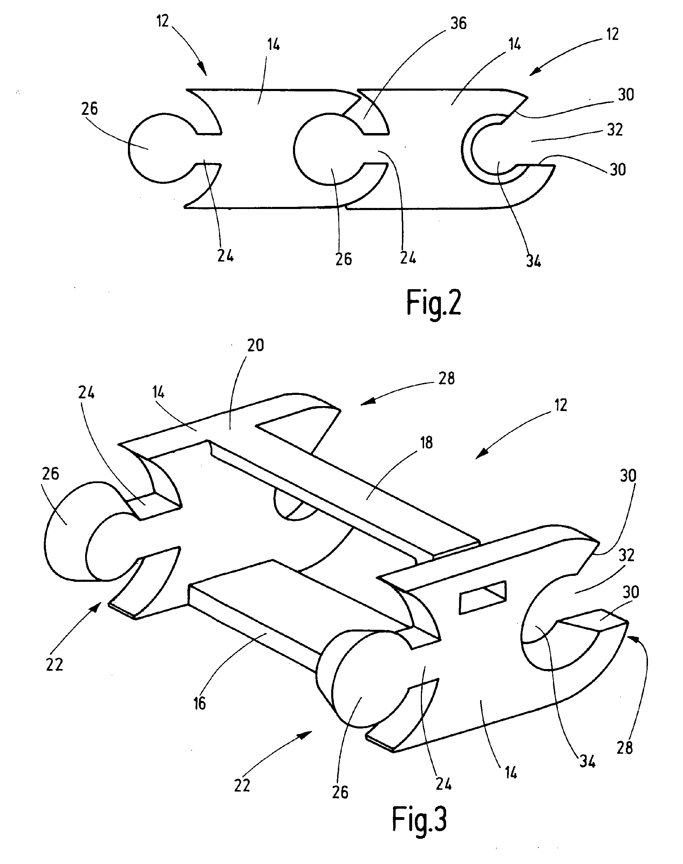

Eine Energieführungskette 10, von der in Fig. 1 ein Abschnitt ohne die ihren Innenraum abdeckenden oberen Rahmenstege abgebildet ist, wird durch eine Anzahl von in Kettenlängsrichtung aneinandergereihten Kettengliedern 12 gemäß Fig. 3 gebildet. Das in Fig. 3 gezeigte Kettenglied 12 weist zwei parallel zueinander angeordnete Seitenglieder 14 auf, die an ihrer Unterseite einstückig mittels eines unteren Rahmenstegs 16 miteinander verbunden sind. Die Seitenglieder 14 und der untere Rahmensteg 16 bilden ein Grundelement des Kettenglieds 12. Desweiteren sind die Seitenglieder 14 durch einen oberen Rahmensteg 16 miteinander verbunden, der am einen Seitenglied 14 mittels eines Filmscharniers 20 angeformt und am anderen Seitenglied 14 durch Einrasten eines Rasthakens in eine Rastöffnung lösbar befestigt ist. Denkbar ist auch, dass in einem alternativen Ausführungsbeispiel der weitere Rahmensteg an beiden Seitengliedern 14 lösbar befestigt ist. Es muß lediglich sichergestellt sein, dass die durch den weiteren Rahmensteg 18 abgedeckte Seite des Kettenglieds 12 zum Einsetzen von Kabeln oder anderen Leitungen geöffnet werden kann.

An ihrem ersten Ende 22 (in Fig. 3 vorne gezeigt) weisen die Seitenglieder 14 einen sich in Längsrichtung erstreckenden Verbindungssteg 24 auf, der einen kegelstumpfförmigen Verbindungszapfen 26 trägt. Die einander gegenüberliegenden Verbindungszapfen 26 verjüngen sich jeweils in Richtung zum Ketteninneren, senkrecht zur Kettenlängsrichtung. An seinem hinteren Ende 28 weist jedes Seitenglied 14 eine durch zwei Anschlagflächen 30 begrenzte Randöffnung 32 auf, die in einen Wanddurchbruch 34 mündet. Der Wanddurchbruch 34 ist in seiner Kontur ebenfalls kegelstumpfförmig und für die Aufnahme eines Verbindungszapfens 26 eines in der Reihe folgenden Seitenglieds 14 bestimmt. Bei einer aus Kettengliedern 12 gemäß Fig. 3 gebildeten Energieführungskette 10, wie in Fig. 1 und 2 schematisch skizziert, sind Verbindungszapfen 26 jeweils in Wanddurchbrüchen 34 formschlüssig und drehbar aufgenommen. Um eine Verschwenkbarkeit der Kettenglieder 12 gegeneinander zu gewährleisten, ist der Abstand zweier Anschlagflächen 30 derselben Randöffnung 32 größer als die Dicke der Verbindungsstege 24. Die Anschlagflächen 30 bilden dann Endanschläge für die Verbindungsstege 24, wenn die Kettenglieder 12 beim Verfahren der Kette gegeneinander verschwenkt werden.

Zur Herstellung der Energieführungskette 10 wird zunächst in einem Extrusionsverfahren ein Kunststoffstrang extrudiert. Dieser weist, wenn der obere Rahmensteg 18 wie in Fig. 3 einstückig an einem Seitenglied 14 angeformt ist, einen hohlen, rechteckförmigen Querschnitt auf. Wird der obere Rahmensteg 18 an beiden Seitengliedern lösbar befestigt, so weist der Extrusionsstrang einen U-förmigen Querschnitt auf. Nach dem Extrudieren wird mittels eines Laserschneidgeräts der Strang in mehrere, die Kettenglieder 12 bildende Abschnitte getrennt. Dabei werden zum einen Trennschnitte durchgeführt, die z. B. zur Bildung der Wanddurchbrüche 34 die Verbindungszapfen 26 ausschneiden. Desweiteren werden, um die Verschwenkbarkeit der Kettenglieder 12 zueinander sicherzustellen, flächige Bereiche aus dem Extrusionsstrang ausgeschnitten. Dabei handelt es sich in erster Linie zum einen um Bereiche 36 zwischen den Anschlagflächen 30 sowie um Bereiche 38 zwischen den unteren Rahmenstegen 16. Aus dem einstückigen extrudierten Kunststoffstrang wird somit eine Kette von lose zusammenhängenden Kettengliedern 12 hergestellt. Diese hängen nahezu unlösbar zusammen und können nur durch Verformung im Bereich der Verbindungszapfen 26 voneinander getrennt werden. Indem die Seitenglieder 14 jeweils über ihre gesamte Länge eine konstante Dicke aufweisen, so dass die Höhe der Kegelstümpfe der Dicke der Verbindungsstege 24 entspricht, ist die Verbindung sehr stabil und kann nur bei Aufbringen größerer Kräfte gelöst werden.

Zusammenfassend ist folgendes festzuhalten:

Die Erfindung betrifft eine Energieführungskette mit mehreren in Kettenlängsrichtung aneinandergereihten Kettengliedern 12, wobei die Kettenglieder 12 jeweils zwei Seitenglieder 14 und mindestens einen die Seitenglieder 14 miteinander verbindenden Rahmensteg 16 aufweisen, wobei die Seitenglieder 14 jeweils einen Verbindungszapfen 26 an ihrem ersten Ende 22 und einen zum zweiten Ende 28 hin eine Randöffnung 32 aufweisenden Wanddurchbruch 34 zur drehbaren Aufnahme des Verbindungszapfens 26 des in Kettenlängsrichtung folgenden Seitengliedes 14 aufweisen, wobei die Kontur der Wanddurchbrüche 34 der Kontur der Verbindungszapfen 26 entspricht, wobei die Verbindungszapfen 26 auf sich in Kettenlängsrichtung erstreckenden Verbindungsstegen 24 zum Eingreifen in die Randöffnungen 32 angeordnet sind, wobei die Randöffnungen 32 jeweils zwei Anschlagflächen 30 als Endanschläge für den in sie eingreifenden Verbindungssteg 24 beim Drehen des Verbindungszapfens 26 im Wanddurchbruch 34 aufweisen, und wobei die beiden Verbindungszapfen 26 jedes der Kettenglieder 12 sich quer zur Kettenlängsrichtung in entgegengesetzten Richtungen verjüngen.

## Patentansprüche

1. Energieführungskette mit mehreren in Kettenlängsrichtung aneinandergereihten Kettengliedern (12), wobei die Kettenglieder (12) jeweils zwei Seitenglieder (14) und mindestens einen die Seitenglieder (14) miteinander verbindenden Rahmensteg (16) aufweisen, wobei die Seitenglieder (14) jeweils einen Verbindungszapfen (26) an ihrem ersten Ende (22) und einen zum zweiten Ende (28) hin eine Randöffnung (32) aufweisenden Wanddurchbruch (34) zur drehbaren Aufnahme des Verbindungszapfens (26) des in Kettenlängsrichtung folgenden Seitenglieds (14) aufweisen, wobei die Kontur der Wanddurchbrüche (34) der Kontur der Verbindungszapfen (26) entspricht, wobei die Verbindungszapfen (26) auf sich in Kettenlängsrichtung erstreckenden Verbindungsstegen (24) zum Eingreifen in die Randöffnungen (32) angeordnet sind, wobei die Randöffnungen (32) jeweils zwei Anschlagflächen (30) als Endanschläge für den in sie eingreifenden Verbindungssteg (24) beim Drehen des Verbindungszapfens (26) im Wanddurchbruch (34) aufweisen, und wobei die beiden Verbindungszapfen (26) jedes der Kettenglieder (12) sich quer zur Kettenlängsrichtung in entgegengesetzten Richtungen verjüngen.

2. Energieführungskette nach Anspruch 1, **dadurch gekennzeichnet, dass** die Verbindungszapfen (26) die Form von Kegelstümpfen aufweisen.

3. Energieführungskette nach Anspruch 2, **dadurch gekennzeichnet, dass** sich die Kegelstümpfe jeweils zum Ketteninneren hin verjüngen.

4. Energieführungskette nach Anspruch 2 oder 3, **dadurch gekennzeichnet, dass** die Seitenglieder (14) eine konstante, der Höhe der Kegelstümpfe entsprechende Dicke aufweisen.

5. Energieführungskette nach einem der vorangehenden Ansprüche, **dadurch gekennzeichnet, dass** die Kettenglieder (12) jeweils ein einstückig zusammenhängendes Grundelement, bestehend aus den beiden Seitengliedern (14) und dem mindestens einen Rahmensteg (16), aufweisen.

6. Energieführungskette nach einem der vorangehenden Ansprüche, **dadurch gekennzeichnet, dass** die Kettenglieder (12) jeweils einen weiteren, die beiden Seitenglieder (14) miteinander verbindenden Rahmensteg (18) aufweisen.

7. Energieführungskette nach Anspruch 6, **dadurch gekennzeichnet, dass** der weitere Rahmensteg (18) mittels eines Filmscharniers (20) an einem der Seitenglieder (14) einstückig angeformt und am anderen Seitenglied (14) lösbar befestigt ist.

8. Energieführungskette nach Anspruch 6, **dadurch gekennzeichnet, dass** der weitere Rahmensteg (18) an beiden Seitengliedern (14) lösbar befestigt ist.

9. Kettenglied für eine Energieführungskette mit zwei Seitengliedern (14) und mindestens einem die Seitenglieder (14) miteinander verbindenden Rahmensteg (16), wobei die Seitenglieder (14) jeweils einen an ihrem ersten Ende (22) auf einem sich in ihrer Längsrichtung erstreckenden Verbindungssteg (24) angeordneten Verbindungszapfen (26) sowie einen zu ihrem zweiten Ende (28) hin eine durch zwei Anschlagflächen (30) begrenzte Randöffnung (32) aufweisenden Wanddurchbruch (34) aufweist, wobei die Kontur der Wanddurchbrüche (34) der Kontur der Verbindungszapfen (26) entspricht, wobei der Abstand zweier jeweils eine der Randöffnungen (32) begrenzender Anschlagflächen (30) größer ist als die Breite der Verbindungsstege (24) und wobei sich die Verbindungszapfen (26) in einander entgegengesetzten, quer zur Längsrichtung der Seitenglieder (14) verlaufenden Richtungen verjüngen.

10. Kettenglied nach Anspruch 9, **dadurch gekennzeichnet, dass** die Verbindungszapfen (26) die Form von Kegelstümpfen aufweisen.

11. Kettenglied nach Anspruch 10, **dadurch gekennzeichnet, dass** sich die Kegelstümpfe jeweils zum Kettengliedinneren hin verjüngen.

12. Kettenglied nach Anspruch 9 oder 10, **dadurch gekennzeichnet, dass** die Seitenglieder (14) eine konstante, der Höhe der Kegelstümpfe entsprechende Dicke aufweisen.

13. Verfahren zur Herstellung einer Energieführungskette nach einem der Ansprüche 1 bis 8, **dadurch gekennzeichnet, dass** mittels eines Extrusionsverfahrens ein im Querschnitt U-förmiger oder ein hohler, im Querschnitt rechteckiger Strang aus Kunststoff hergestellt wird, und dass der Strang mittels eines Laserschneidgeräts in mehrere, die Kettenglieder (12) bildende Abschnitte getrennt wird, wobei die Wanddurchbrüche (34), die Verbindungszapfen (26), die Verbindungsstege (24) und die Rahmenstege (16, 18) durch Schneiden geformt werden.
